# EUROPEAN PATENT APPLICATION

(11) **EP 3 872 967 A1**
(43) Date of publication of application: **01.09.2021**
(21) Application number: 20159894.3
(22) Date of filing: 27.02.2020
(51) Int. Cl.: H02K 5/18, H02K 5/20, H02K 7/18, H02K 9/22, H02K 21/22

(54) **EXTERNAL ROTOR HOUSE OF WIND POWER GENERATOR WITH ENHANCED MAGNET COOLING**

(71) Applicant: Siemens Gamesa Renewable Energy A/S, 7330 Brande (DK)
(72) Inventor: AZAR, Ziad, S10 4ED Sheffield (GB); GOUSSEAU, Pierre, 7100 Vejle (DK); SARCEVIC, Aljosa, 7330 Brande (DK)
(74) Representative: Aspacher, Karl-Georg

(57) **Abstract**

Disclosed is a housing wall (100) for a rotor housing of a rotor (40)for an external electric power generator (10) of a, for example direct-drive, wind turbine, or a housing wall (100) for a rotor housing of a rotor for an external rotor of an electric machine, for example an electric generator or an electric motor. The housing wall (100) is an outer housing wall and has: an inner wall surface (110), an outer wall surface (114) and an axial length (124). The inner wall surface (110) is cylindrical. The outer wall surface (112) has at least one indentation (130), which extends over at least a part of the axial length (124), in particular over the total axial length (124), of the outer wall surface (112). The outer wall surface (112) may have a plurality of such indentations (130). The indentations (130) may, or may not, be equally spaced along the circumferential direction (108) around the outer wall surface (112). The indentations (130) may extend at a spiral angle (132) with respect to the axial direction (104) of the housing wall (102). The at least one indentation (130), in particular each indentation (130), may have, when viewed parallel to an axial direction (124) of the housing wall (102) in a cross-section that contains a cylinder axis (104) of the housing wall (102), a cross-sectional shape that is selected from the group that includes a substantially rectangular shape (140), a substantially trapezoidal shape (142), a substantially zig-zag shape (144), a substantially undulating shape (146).

## Description

### Technical area

The present disclosure relates to a housing wall for a rotor for an external electric power generator of a, for example direct-drive, wind turbine, or a housing wall for a rotor housing of a rotor for an external rotor of an electric machine, for example an electric generator or an electric motor. The present invention further relates to a rotor for an external electric power generator of a wind turbine.

### Background art

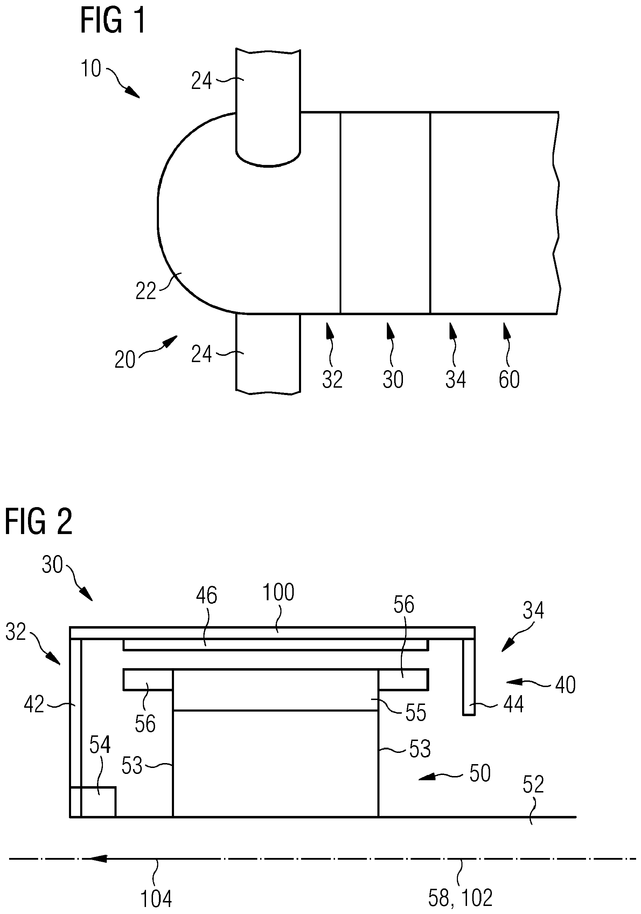

The technical background for the present disclosure shall be discussed in part with reference to Figures 1 to 3.

Wind turbines 10, in particular direct-drive wind turbines, may have an external wind power generator 30 (see Fig. 1), which is not arranged within a nacelle 60 of the wind turbine 10, but rather directly adjacent to a wind-driven rotor hub 22 that supports blades 24 of the wind turbine 10. Such external wind power generators 30 extend axially between a drive end 32 and a non-drive end 34, and have a rotor 40 having an external rotor housing (not referenced), and an internal stator 50 having a stator axis 58 (see Fig. 2). The rotor 40 is configured to rotate around the stator 50, in particular the stator axis 58. The rotation of the rotor 40 is enabled by a bearing or bearings 46, which couple the rotor 40 rotatably to the stator 50 (see Fig. 2).

As is indicated in Fig. 2, the stator 50 comprises a shaft 52, which is connected to and supported by the nacelle 60 and which is substantially rotational-symmetric about the stator axis 58, a first and a second substantially circular stator plate 53, each of which is fixed, e.g. bolted, to the shaft 52, and a plurality of stator segments 55, each of which is supported by, e.g. bolted to, the stator plates 53, and which are distributed circumferentially around the stator axis 58. Each stator segment 55 comprises a plurality of radially and tangentially extending steel sheets (not shown) and a plurality of, typically copper, windings 56.

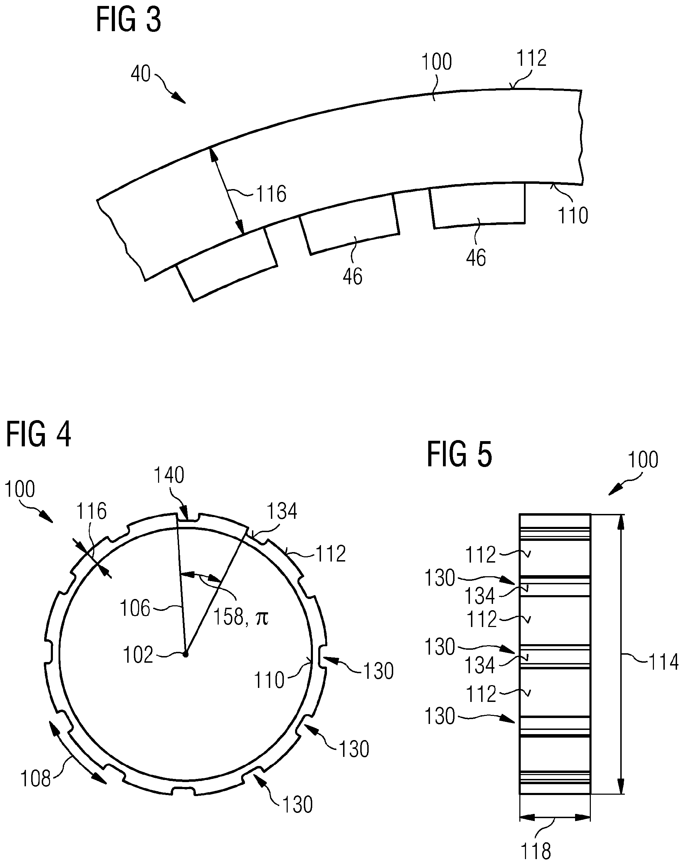

The rotor housing has an external or outer housing wall 100, which is part of the rotor 40 of the electric power generator 30 of the wind turbine 10. The external outer housing wall 100 typically has a substantially cylindrical shape. Also, the external outer housing wall 100 is directly exposed to air (or wind) of the environment that has passed by the blades 24 and driven the blades 24 to rotate. There are so-called permanent magnet excitation machines, in which the rotor 40 of the electric power generator 30 comprises, in addition to the outer housing wall 100, a plurality of permanent magnets or permanent magnet elements 46 (see Figs. 2 and 3), which extend longitudinally and parallel to an axis 102 of the rotor 40 and/or of the substantially cylindrical outer housing wall 100, and which are supported on an inner wall surface 110 of the outer housing wall 100 of the rotor 40. As an alternative to and instead of using permanent magnets 46, in so-called electrical excitation machines, magnetic field excitation coils may be used, which are driven by a substantially constant electric current so as to generate a permanent magnetic field.

The rotor 40 (see Fig. 1) further has a first base plate 42, which is substantially annular shaped and arranged perpendicular to the axis 102 at an axial drive end 12 of the rotor 40 facing the wind-driven rotor hub 22, and a second base plate 44, which may function as a brake disk in operation of the electric power generator 30, and which is substantially annular shaped and arranged perpendicular to the axis 102 at an axial non-drive end 34 of the rotor 40 facing away from the wind-driven rotor hub 22 and towards the nacelle 60.

There are trends in the technical development of direct-drive wind turbines 10, which include ever increasing size (including diameter) of wind-driven rotor hubs 22 and the size (including diameter) of the electric generator 30 including the rotor 40 and its substantially cylindrical outer housing wall 100, and ever increasing nominal electric output power of the electric generator 30.

Power losses occur in the generator 30, in particular in the rotor 40, among others due to eddy currents, which are periodically generated in the main components of the rotor 40, including the substantially cylindrical outer housing wall 100, the first and the second base plate 42, 44, and the permanent magnets 46.

Power losses in the rotor 40 become a critical problem particularly in direct drive wind power generators 30 in that they can even limit the power output of the wind turbine 10.

These power losses will result in less performance, less power capacity, and lower derating ambient temperatures. The latter term, i.e. derating ambient temperature, refers to the external ambient temperature, at which the temperature limit of the generator 30 is reached. This can occur in various components, such as the windings 56 or the permanent magnets 45. When the temperature increases beyond this threshold, the turbine power output must be reduced to avoid over-heating. Hence, these power losses will lead more generally to lower Annual Energy Production (AEP) and higher Cost of Energy (CoE) .

The issue of power losses in the rotor 40 has been approached hitherto on the one hand by approaches that are directed to reducing the losses themselves, for example by implementing well developed techniques, such as magnet segmentation. The segmentation consists in splitting each longitudinal magnet element 46 into plural smaller pieces, so as to reduce the generation of eddy currents. However, the reduction in size of the magnet pieces has only a limited effect and is normally associated with lower performance and/or higher cost.

Other approaches are directed to increasing heat dissipation from the sources of heat, i.e. the parts where eddy currents are generated, in particular the magnets. One approach would be to add cooling fins (not shown) on the outside surface of the outer housing wall 100 of the rotor housing. This could be effective, however, the fixation of the fins may involve reductions of thermal conductivities along the heat dissipation paths caused by the particular techniques that are known to fix fins to a surface. Such fin fixation techniques include gluing fins to a surface (which involves a thin layer of adhesive between a fin and the surface), or welding or bolting fins to a surface (which may involve a thin layer of air between a fin and the surface). Such reductions of thermal conductivities may be off-putting for such techniques. Another disadvantage of using cooling fins is the required maintenance for keep fixing or replacing them.

Still another approach directed to increasing heat dissipation might be forced cooling, either by air or liquid. A disadvantage of forced cooling is increased cost and required maintenance of the forced cooling system.

### Summary of the disclosure

The present disclosure generally aims at avoiding or mitigating the disadvantages of the conventional approaches for increasing heat flow and/or improving heat dissipation from a rotor.

It is an object of the present disclosure to provide a housing wall 100 for a rotor housing of a rotor 40 for an external electric power generator 30 of a, for example direct-drive, wind turbine, wherein the housing wall 100 provides for an enhanced heat transfer from the inside of the housing wall 100 via the external or outer wall surface 112 of the housing wall 100 to the outside air environment, and in particular from the generator's magnets 46, which are supported on the inner wall surface 110, through the housing wall 100 via the external or outer surface 112 of the housing wall 100 to the outside air environment.

This object is solved by the subjects having the features according to the independent patent claims. Further embodiment examples are shown in the dependent claims.

Generally, the present invention proposes to increase the cooling surface of the outer surface of a housing wall of the rotor, namely by implementing indentations or grooves in the external surface of the housing wall.

According to an embodiment example of the present disclosure, there is established a housing wall for a rotor housing of a rotor for an external electric power generator of a, for example direct-drive, wind turbine, and/or a housing wall for a rotor housing of an external rotor of an electric machine, for example an electric generator or an electric motor. The housing wall is an outer housing wall and has an inner wall surface, an outer wall surface and an axial length. The inner wall surface is cylindrical. The outer wall surface has at least one indentation (or groove), which extends over at least a part of the axial length, in particular over the total axial length, of the outer wall surface.

In exemplary embodiment examples of the present disclosure, the outer wall surface may have a plurality of indentations (or grooves), at least some of which extend over at least a part of the axial length, in particular over the total axial length, of the outer wall surface. In particular, a first portion of a plurality of indentations may extend over only a part of the axial length, and a second portion of the plurality of indentations may extend over the total axial length, of the outer wall surface.

Providing indentations (or grooves) in the outer wall surface increases the surface area that interfaces to the ambient air, thereby increasing the overall heat flow of the heat to be dissipated. At the same time, the provision of indentations eliminates heat conductivity issues associated with a fixation of fins on the outer surface. In particular, the provision of indentations avoids the contact resistance of conventional fins that are provided separately and fixed to the outer wall surface of the housing wall. In addition, the provision of indentations instead of conventional fins provides a maintenance-free solution for increasing heat flow and/or improving heat dissipation.

It is noted that embodiment examples of the present disclosure are not only directed to a housing wall for a rotor housing of a rotor for an external electric power generator of a, for example direct-drive, wind turbine. Rather, the present disclosure is directed and can be applied also a housing wall for a rotor housing of an external rotor of any electric machine, for example an electric generator or an electric motor.

In exemplary embodiment examples of the present disclosure, in the region/s of the outer wall surface outside of the at least one indentation, in particular outside of each indentation, the outer wall surface may be cylindrical. In exemplary embodiment examples of the present disclosure, the at least one indentation, in particular each indentation, has an indentation bottom, which is cylindrical, or in other words forms a portion of an outer cylindrical surface. In an exemplary embodiment example of the present disclosure, the at least one indentation, in particular each indentation, may be machined into the outer wall surface of the housing wall. Machining of indentations into a cylindrical outer surface, and such that the "digged-out" bottom of the indentation is also cylindrical, is particularly convenient and cost-efficient to be carried out. Also, as a result of the machining of the indentations into the outer wall surface, the indentations as well as the regions between the indentations form an integral portion of the housing wall, and there are no problems with reduced heat conductivity due to e.g. fixation techniques for fixing structures that increase the surface area to the outer surface of the housing wall.

The size, shape, number, distribution and arrangement of the indentations may be optimized for each turbine generator design. Some example embodiments shall be described in the following.

In exemplary embodiment examples of the present disclosure, the indentations may be equally spaced, by a circumferential pitch and/or by a corresponding angular pitch, along the circumferential direction around the outer wall surface.

Alternatively, in alternative exemplary embodiment examples of the present disclosure, the indentations may not all be equally spaced along the circumferential direction around the outer wall surface. In particular, the plurality of indentations may comprise at least two groups of equally spaced indentations, wherein the at least two groups have a different mutual circumferential spacing of adjoining indentations in the circumferential direction.

In exemplary embodiment examples of the present disclosure, an outer wall diameter of the outer wall surface may be in a range from 4,0 m to 12 m, in particular from 5,0 m to 10 m, and more in particular from 6,0 m to 8,0 m. Alternatively or in addition, a total radial wall thickness of the outer wall surface may be in a range from 30 mm to 60 mm, in particular from 32 mm to 50 mm, more in particular from 34 mm to 40 mm. Still alternatively or in addition, a ratio of a total radial wall thickness of the outer wall surface to an outer wall diameter of the outer wall surface may be in a range between 0,4% to 1,0%, in particular from 0,5% to 0,8%.

In exemplary embodiment examples of the present disclosure, the at least one indentation, in particular each indentation, may extend at a spiral angle with respect to the axial direction of the housing wall. The spiral angle may be optimized such that air can flow optimally along and through the one or more indentations, i.e. with a thin interface layer, in particular as a function of wind speed and rotating speed of the wind rotor and the joined rotor housing of the electric generator. In particular, the spiral angle may be in a range from 12° to 20°, in particular from 13° to 19°, more in particular from 14° to 18°, and still more in particular from 15° to 17°.

In exemplary embodiment examples of the present disclosure, at least one indentation, in particular each indentation, may have, when viewed in an axial direction of the housing wall in a cross-section that is perpendicular to the axial direction of the housing wall, a cross-sectional shape that is selected from the group that includes a substantially rectangular shape, a substantially trapezoidal shape, a substantially zig-zag shape, a substantially undulating shape.

In exemplary embodiment examples of the present disclosure, said cross-sectional shape may be substantially rectangular or substantially trapezoidal. Then, said cross-sectional shape of the indentation has a radial height, a circumferential width, a cylindrical outer wall surface between adjacent indentations has a circumferential length; and at least some of a plurality, in particular three, of the indentations are equally spaced in the circumferential direction by a circumferential pitch and/or by a corresponding angular pitch. Based on these definitions, at least one of the following conditions may hold:
- the radial height may be in a range from 10 mm to 50 mm;
- the circumferential width is in a range from 100 mm to 600 mm, in particular from 100 mm to 500 mm;
- the circumferential length may be in a range from 10 mm to 70 mm in particular from 10 mm to 50 mm, or from 100 mm to 500 mm, in particular from 100 mm to 350 mm;
- the number of indentations along the total circumference may be in a range from 30 to 250, in particular from 50 to 150, more in particular from 70 to 140;
- the circumferential pitch may be in a range from 100 mm to 500 mm, in particular from 125 mm to 400 mm, and more in particular from 150 mm to 300 mm;
- the angular pitch may be in a range from 2° to 10°, in particular from 2,5° to 8°, and more in particular from 3° to 6°; - a ratio between the radial height of the indentation and the radial wall thickness of the housing wall, in particular the radial wall thickness as measured in surface areas outside of the one or plural indentations, is in a range from 0,5 to 1,0; and
- if the cross-sectional shape is trapezoidal, an inclination angle of a side wall of the indention with respect to the radial direction is from 30° to 75°, in particular from 40° to 60°.

In exemplary embodiment examples of the present disclosure, the substantially trapezoidal cross-sectional shape may differ from the substantially rectangular cross-sectional shape by at least one of the following features:
- a transition from the outer wall surface to a side surface of the indentation is chamfered;
- a side surface of the indentation is inclined, in particular by an inclination angle;
- a transition from a side surface of the indentation to the indentation bottom is chamfered.

In other exemplary embodiment examples of the present disclosure, said cross-sectional shape may be substantially zig-zag or substantially undulating. Then, the cross-sectional shape of the indentation has a radial height, a circumferential width, at least a portion of a side surface of the indentation has an inclination angle with respect to the radial direction, and at least some of a plurality, in particular three, of the indentations are equally spaced in the circumferential direction by a circumferential pitch and/or by a corresponding angular pitch. Based on these definitions, at least one of the following conditions holds:
- the radial height may be in a range from 10 mm to 50 mm;
- the circumferential width may be equal to the circumferential pitch and is in a range from 20 mm to 75 mm, in particular from 30 mm to 60 mm;
- a ratio between the radial height of the indentation and the radial wall thickness of the housing wall, in particular the radial wall thickness as measured in surface areas outside of the one or plural indentations, in particular as measured through a peak, may be in a range from 0,5 to 1,0;
- at least a portion of the side surface of the indentation may have an inclination angle, β, of a side wall of the indention with respect to the radial direction from 30° to 75°, in particular from 40° to 60°, and more in particular 45°;
- the number of indentations along the total circumference of the outer wall surface may be in a range from 250 to 1000, in particular from 300 to 750, more in particular from 400 to 600.

In exemplary embodiment examples of the present disclosure, the outer wall surface may have a tapering section, in a section outside of the at least one indentation, in particular outside of each indentation, and along the axial direction in a range of 100 mm, in particular 75 mm, more in particular 50 mm, as measured from an axial end of the housing wall, which end faces a wind turbine's blades and hub to be connected to the rotor housing. The tapering section may be tapering in a direction towards the axial end when viewed in a cross-section that contains an axis of the housing wall from the outer wall surface to the indentation bottom. In particular, the tapering may proceed in a linear shape, or in a curved shape that is selected from the group that consists of an elliptical shape, a parabolic shape, a hyperbolic shape. The tapering is provided to smooth out the transition from the outer surface of a wind rotor hub to the outer wall surface of the housing wall.

In exemplary embodiment examples of the present disclosure, the plurality of indentations may comprise a first group of indentations and a second group of indentations, wherein the indentations in the first group differ from the indentations in the second group at least by one parameter that is selected from the group consisting of an axial length of the indentation, a position of the indentation in the axial direction of the housing wall, and a shape of the indentation when viewed in an axial direction of the housing wall in a cross-section that is perpendicular to the axial direction of the housing wall.

In exemplary embodiment examples of the present disclosure, the inner wall surface of the housing wall may support a plurality of, in particular axially elongated, magnet elements (as for example in permanent magnet excitation machines), or magnetic field excitation coils (as for example in electrical excitation machines).

According to another embodiment example of the present disclosure, there is established a rotor for an external electric power generator of a, for example direct-drive, wind turbine, and/or a rotor for an external rotor of an electric machine, for example an electric generator or an electric motor. The rotor has a rotor housing having an outer housing wall as described above.

In exemplary embodiment examples of the rotor of the present disclosure, the inner wall surface of the housing wall may support a plurality of, in particular axially elongated, magnet elements (as for example in permanent magnet excitation machines), or magnetic field excitation coils (as for example in electrical excitation machines).

### Brief description of the drawings

In the following, exemplary embodiment examples of the present disclosure are described in detail with reference to the following drawings.
**Fig. 1** shows, in a side view, a direct-drive wind turbine having a conventional external electric generator, wherein the electric generator has a conventional rotor housing having a substantially cylindrical outer wall surface.
**Fig. 2** shows a cross-sectional view, in a plane comprising the axis, of a conventional electric generator with a conventional rotor housing and with main components of the generator.
**Fig. 3** shows, in a cross-sectional view, a portion of a conventional housing wall of a conventional rotor housing with magnets supported on the inner wall surface.
**Fig. 4** shows a plan view, seen in the axial direction, of a housing wall, for a rotor housing of a rotor, having indentations in the outer wall surface, according to a first embodiment example of the present invention.
**Fig. 5** shows a plan view, seen perpendicular to the axial direction, of the housing wall, according to the first embodiment example of the present invention shown in Fig. 4.
**Fig. 6** shows a perspective view of the housing wall, according to the first embodiment example of the present invention shown in Fig. 4.
**Fig. 7** shows a plan view, viewed perpendicular to the axial direction and similar to Fig. 5, of a housing wall having indentations in the outer wall surface, according to a modification of the first embodiment example of the present invention shown in Fig. 4.
**Fig. 8** shows a plan view, seen in the axial direction, of a housing wall, for a rotor housing of a rotor, having indentations in the outer wall surface, according to a second embodiment example of the present invention.
**Fig. 9** shows a plan view, seen perpendicular to the axial direction, of the housing wall, according to the second embodiment example of the present invention shown in Fig. 8.
**Fig. 10** shows a perspective view of the housing wall, according to the second embodiment example of the present invention shown in Fig. 8.
**Fig. 11** shows in a plan view, seen in the axial direction, a magnified portion of the housing wall according to the first embodiment example of the present invention shown in Fig. 4, wherein particular geometrical dimensions are indicated, which characterize the shape of the indentations and of the outer wall surface.
**Fig. 12** shows a plan view, seen in the axial direction, of a housing wall, for a rotor housing of a rotor, having indentations in the outer wall surface, according to a third embodiment example of the present invention.
**Fig. 13** shows a plan view, seen perpendicular to the axial direction, of the housing wall, according to the third embodiment example of the present invention shown in Fig. 12.
**Fig. 14** shows a perspective view of the housing wall, according to the third embodiment example of the present invention shown in Fig. 12.
**Fig. 15** shows a perspective view of a magnified portion of the housing wall as shown in Fig. 14, according to the third embodiment example of the present invention shown in Fig. 12.
**Fig. 16** shows a plan view, seen in the axial direction, of a housing wall, for a rotor housing of a rotor, having indentations in the outer wall surface, according to a fourth embodiment example of the present invention.
**Fig. 17** shows a plan view, seen perpendicular to the axial direction, of the housing wall, according to the fourth embodiment example of the present invention shown in Fig. 16.
**Fig. 18** shows a perspective view of the housing wall, according to the fourth embodiment example of the present invention shown in Fig. 16.
**Fig. 19** shows a perspective view of a magnified portion of the housing wall as shown in Fig. 14, according to the fourth embodiment example of the present invention shown in Fig. 16.
**Fig. 20** shows in a plan view, seen in the axial direction, a magnified portion of the housing wall according to the third embodiment example of the present invention shown in Fig. 12, wherein particular geometrical dimensions are indicated, which characterize the shape of the indentations and of the outer wall surface.
**Fig. 21** shows a perspective view, similar to the view of Fig. 6, of a magnified portion of the housing wall, according to a further modification of the first embodiment example of the present invention shown in Fig. 4.
**Fig. 22** shows a perspective view, similar to the views of Figs. 6 and 21, of a magnified portion of the housing wall, according to a still further modification of the first embodiment example of the present invention shown in Fig. 4.
**Fig. 23** shows, in a cross-sectional view, a portion of a housing wall according to a fifth embodiment example of the present invention, wherein the cross-sectional view cuts, in a plane comprising the axis, through a peak line of a region between two adjacent indentations according to any one of the first to fourth embodiment,.

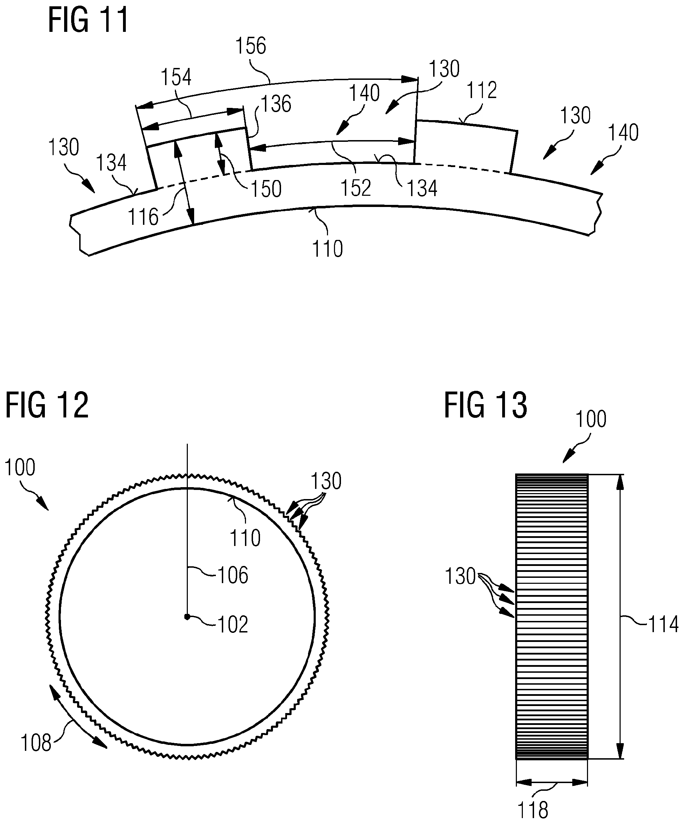

Similar or like components in different figures are provided with the same reference numerals. The figures are not necessarily drawn to scale, and may be schematic, such as for example Figures 4 to 7, Figures 8 to 10,. Figures 12 to 15, and Figures 16 to 20.

### Detailed description of embodiments

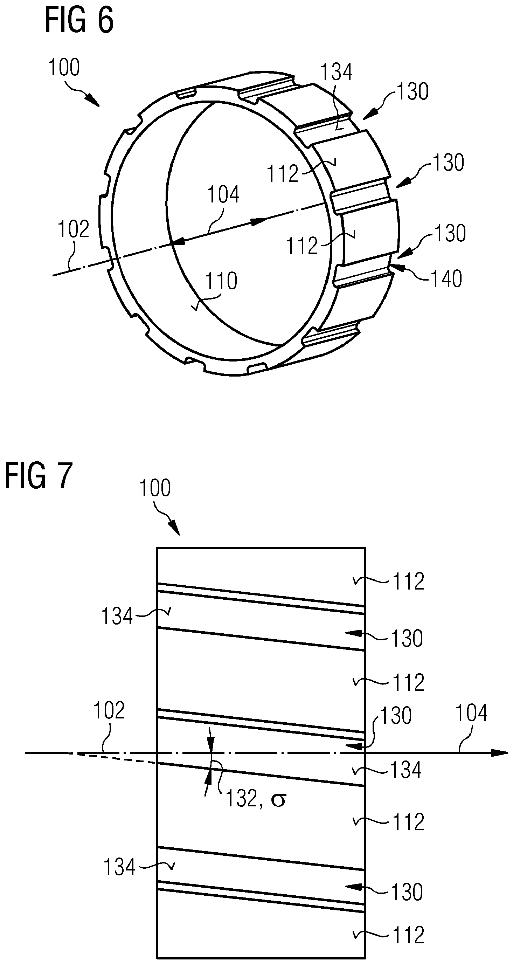

**Fig. 4** shows a plan view, seen in the axial direction 104, of a housing wall 100, for a rotor housing of a rotor 20, having a having indentations 130 in the outer wall surface 112, according to a first embodiment example of the present invention. **Fig. 5** shows a plan view, seen perpendicular to the axial direction 104, of the housing wall 100, according to the first embodiment example of the present invention shown in Fig. 4. **Fig. 6** shows a perspective view of the housing wall 100, according to the first embodiment example of the present invention shown in Fig. 4.

The housing wall 100 shown in Figures 4 to 6 is for a rotor housing of a rotor 40 (see Fig. 2) for an external electric power generator 10 (see Fig. 1) of a, for example direct-drive, wind turbine (not shown). The housing wall 100 is an outer housing wall of the rotor housing, so that an outer wall surface 112 of the housing wall 100 is exposed to ambient air in the environment of the wind turbine.

The housing wall 100 has an inner wall surface 110, an outer wall surface 114 and an axial length 124 (indicated in Fig. 5). As can be seen best in Fig. 6, the inner wall surface 110 is cylindrical.

An outer wall diameter 114 of housing wall 100 (see Fig. 4), more precisely of the outer wall surface 112, is in a range from 4,0 m to 12 m. The outer wall diameter 114 may in particular be in a range from 5,0 m to 10 m, and more in particular from 6,0 m to 8,0 m. A total radial wall thickness 116 of the outer wall surface 112 (see Fig. 4) is in a range from 30 mm to 60 mm. In particular, the total radial wall thickness 116 may be in a range from 32 mm to 50 mm, and more in particular from 34 mm to 40 mm. A ratio of a total radial wall thickness 116 of the outer wall surface 112 to an outer wall diameter 114 of the outer wall surface 112 is in a range between 0,4% to 1,0%, in particular from 0,5% to 0,8%.

As can be seen in each one of the Figures 4 to 6, the outer wall surface 112 has at least one indentation 130, which extends over the total axial length 124 of the outer wall surface 112. Preferably, of course, the outer wall surface 112 has a plurality of indentations 130, each of which extends over the total axial length 124 of the outer wall surface 112 (see Fig. 5). Providing indentations 130, or grooves, in the outer wall surface 112 increases the surface area that interfaces to the ambient air, thereby increasing the overall heat flow and hence the heat dissipation from magnet elements 46 that may be fixed on the inner wall surface 110 of the housing wall 100 as shown in Fig. 3. At the same time, the provision of indentations 130 eliminates heat conductivity issues associated with a fixation of fins on the outer wall surface 112.

As can be seen in Figures 4 and 6, in the regions of the outer wall surface 112 outside of the at least one indentation 130, in particular outside of, and between, each indentation 130, also the outer wall surface 112 is cylindrical. The at least one indentation 130, in particular each indentation 130, has an indentation bottom 134, which is also cylindrical and forms a portion of an outer cylindrical surface.

Each one of the indentations 130 has been obtained from a process of machining into the outer wall surface 112 of the housing wall 102. In other words, each one of the indentions 130 has been machined into the outer wall surface 112 of the housing wall 102. The machining of the indentations 100 into a cylindrical outer surface, such that the "digged-out" indentation bottom 134 of the indentation is also cylindrical, is particularly convenient and cost-efficient to be carried out. Also, as a result of the machining of the indentations 130 into the outer wall surface, the indentations 130 as well as the regions between the indentations 130 form an integral portion of the housing wall 100, and there are no problems with reduced heat conductivity due to e.g. fixation techniques for fixing structures that increase the surface area to the outer surface of the housing wall.

As can be also seen in Figures 4 and 6, the indentations 130 are equally spaced along the circumferential direction 108 around the outer wall surface 112.

**Fig. 7** shows a plan view, viewed perpendicular to the axial direction 124 and similar to Fig. 5, of a housing wall 100 having indentations 130 in the outer wall surface 112, according to a modification of the first embodiment example of the present invention shown in Fig. 4.

As can be seen in Fig. 7, at least one indentation 130, in particular each indentation 130, may extend at a spiral angle 132 with respect to the axial direction 104 of the housing wall 102. The spiral angle 132 can be optimized as a function of the wind speed in relation to the rotational speed of the wind rotor, and hence the rotational speed of the housing wall 100. In result of according calculations, the spiral angle 132 may be in a range from 12° to 20°, in particular from 12° to 20°, more in particular from 13° to 19°, more in particular from 14° to 18°, more in particular from 15° to 17°, and still more in particular approximately 16°.

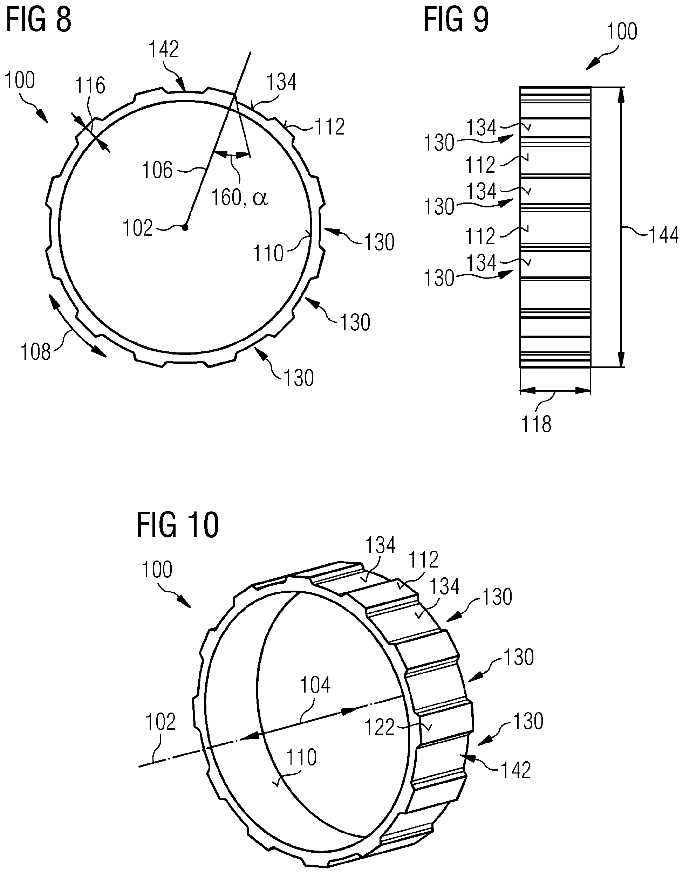

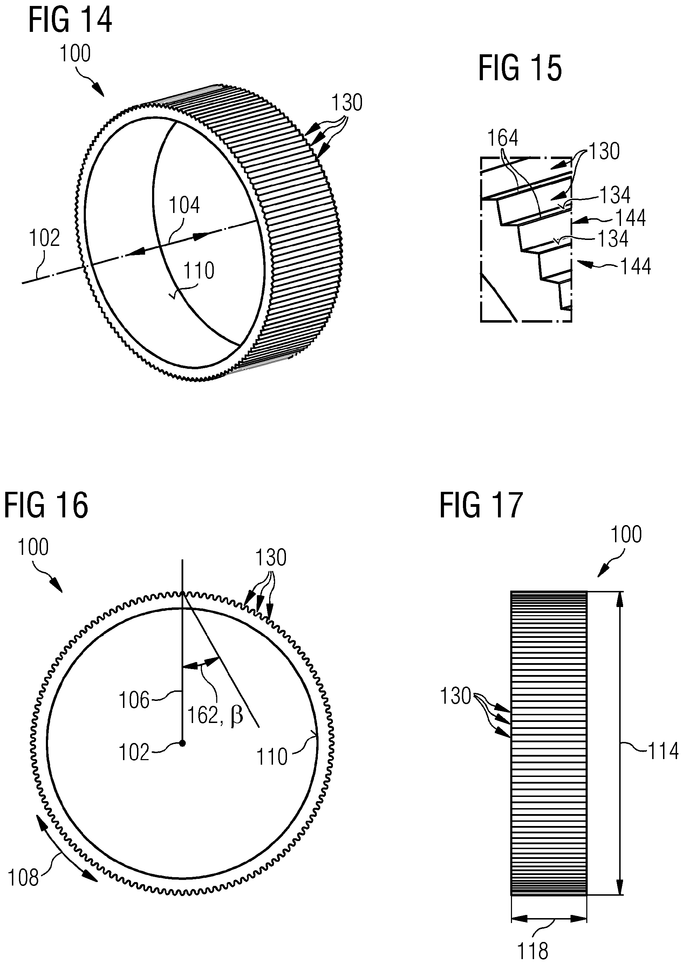

Generally, the size, shape, location, number, distribution and arrangement of the indentations 130 may be optimized for each turbine generator design. One first example embodiments is shown in the Figures 4 to 6, a second example embodiment is shown in the Figures 8 to 10, a third example embodiment is shown in the Figures 12 to 15, and a fourth example embodiment is shown in the Figures 16 to 18. These example embodiments shall be described in more detail in the following.

When viewed in an axial direction 124 of the housing wall 100 in a cross-section that is perpendicular to the axial direction 124, or axis 102, of the housing wall 100, the at least one indentation 130, in particular each indentation 130, may have a cross-sectional shape that is selected from the group that includes a substantially rectangular shape 140 (as shown in Figures 4 to 6), a substantially trapezoidal shape 142 (as shown in Figures 8 to 10), a substantially zig-zag shape 144 (as shown in Figures 12 to 15), and a substantially undulating shape 146 (as shown in Figures 16 to 19).

Not only for substantially rectangular indentations 130 as shown in Fig. 7, but for each one of the proposed cross-sectional shapes, i.e. the substantially rectangular shape 140, the substantially trapezoidal shape 142, the substantially zig-zag shape 144, and the substantially undulating shape 146, the according indentations 130 may extend at a spiral angle 132 with respect to the axial direction 104 of the housing wall 102.

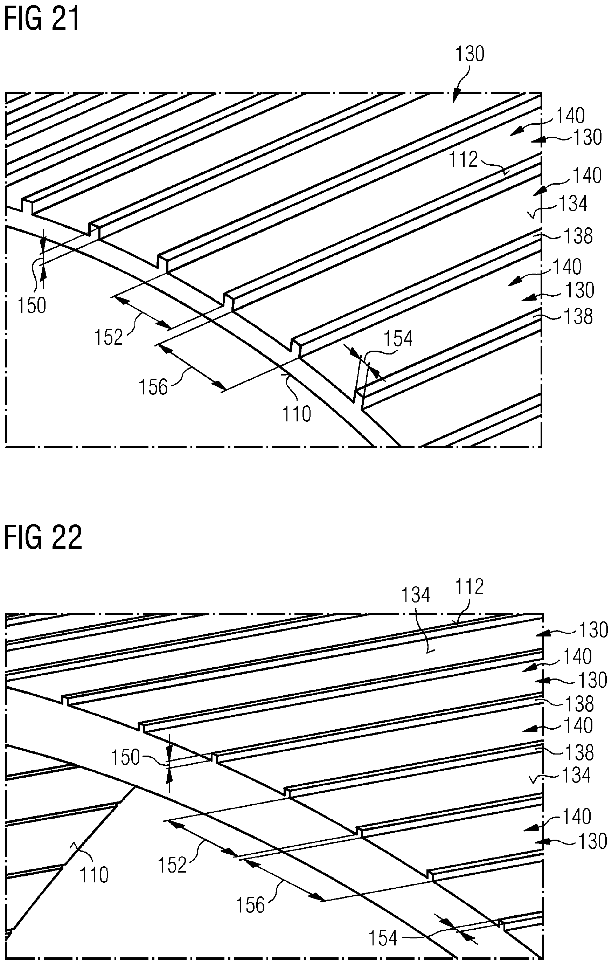

In the first embodiment example of the present invention as shown in the Figures 4 to 6, the cross-sectional shape of the indentations 130 has a rectangular shape 140. It is noted again that Figures 4 to 7 are only schematic, and this for illustrating indentations 130 having a substantially rectangular shape 140 in the cross section cutting perpendicular to the axial direction 124. In modifications of the first embodiment example of the present invention, indentations 130 having substantially rectangular shape 140 may be shaped and distributed similar to the embodiment examples shown in Figures 21 and 22.

**Fig. 8** shows a plan view, seen in the axial direction 124, of a housing wall 100, for a rotor housing of a rotor 20, having indentations 130 in the outer wall surface 112, according to a second embodiment example of the present invention. **Fig. 9** shows a plan view, seen perpendicular to the axial direction 124, of the housing wall 100, according to the second embodiment example of the present invention shown in Fig. 8. **Fig. 10** shows a perspective view of the housing wall 100, according to the second embodiment example of the present invention shown in Fig. 8.

In the second embodiment example of the present invention as shown in the Figures 8 to 10, the cross-sectional shape of the indentations 130 has a trapezoidal shape 142. It is noted again that Figures 8 to 10 are only schematic, and this for illustrating indentations 130 having a substantially trapezoidal shape 142 in the cross section cutting perpendicular to the axial direction 124. In modifications of the second embodiment example of the present invention, indentations 130 having substantially trapezoidal shape 142 may be distributed similar to the indentations 130 shown in Figures 21 and 22.

**Fig. 11** shows in a plan view, seen in the axial direction 124, a magnified portion of the housing wall 100 according to the first embodiment example of the present invention shown in Figures 4 to 6 (wherein the indentations 130 have a substantially rectangular shape 140), wherein particular geometrical dimensions are indicated, which characterize the shape of the indentations 130 and of the outer wall surface 112. The following also holds for the second embodiment example of the present invention shown in Figures 8 to 10 (wherein the indentations 130 have a substantially trapezoidal shape 142).

When the cross-sectional shape of the indentations 130 is substantially rectangular 140 (as in Figures 4 to 6) or substantially trapezoidal 142 (as in Figures 8 to 10), the cross-sectional shape of the indentation 130 may be characterized by a radial height 150, and a circumferential width 152. The cylindrical outer wall surface 112 between adjacent indentations 130 may be characterized by a circumferential length 154. The indentations 130 are equally spaced in the circumferential direction 108, which may be characterized by a circumferential pitch 156 and/or by a corresponding angular pitch 158 (angle π).

Concerning the geometrical shape and dimensions of the substantially rectangular indentations and the substantially trapezoidal indentations, at least one of the following conditions may hold: The radial height 150 is in a range from 10 mm to 50 mm. The circumferential width 152 is in a range from 100 mm to 600 mm, in particular from 100 mm to 500 mm. The circumferential length 154 is in a range from 10 mm to 70 mm, in particular from 10 mm to 50 mm, or from 100 mm to 500 mm, in particular from 100 mm to 350 mm. The number of indentations 130 along the total circumference of the outer wall surface 112 is in a range from 30 to 250, in particular from 50 to 150, more in particular from 70 to 145. The circumferential pitch 156 is in a range from 100 mm to 500 mm, in particular from 125 mm to 400 mm, and more in particular from 150 mm to 300 mm. The angular pitch 158 (or angle π) is in a range from 2° to 10°, in particular from 2,5° to 8°, and more in particular from 3° to 6°. A ratio between the radial height 150 of the indentations 130 and the radial wall thickness 116 of the housing wall 100, in particular the radial wall thickness 116 as measured in surface areas outside of the one or plural indentations 130, is in a range from 0,5 to 1,0. If the cross-sectional shape of the indention 130 is trapezoidal 142, an inclination angle 160 (angle α) of a side wall 136 of the indention 130 with respect to the radial direction 106 is from 30° to 75°, in particular from 40° to 60°.

When comparing Figures 4 to 6 with Figures 8 to 10, it can be seen that the substantially trapezoidal cross-sectional shape 142 differs from the substantially rectangular cross-sectional shape 140 by at least one of the following features: A transition from the outer wall surface 112 to a side surface 137 of the indentation 130 is chamfered. A side surface 137 of the indentation 130 is inclined, in particular by an inclination angle 158 (angle α). A transition from a side surface 137 of the indentation 130 to the indentation bottom 134 is chamfered.

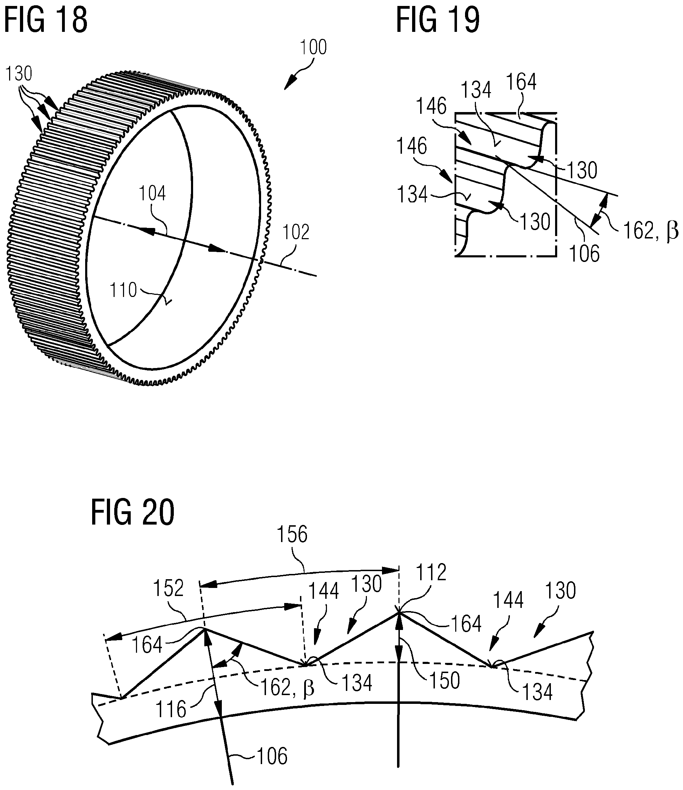

**Fig. 20** shows in a plan view, seen in the axial direction 124, a magnified portion of the housing wall 100 according to the third embodiment example of the present invention shown in Fig. 12, wherein particular geometrical dimensions are indicated, which characterize the shape of the indentations 130 and of the outer wall surface 112.

When the cross-sectional shape of the indentations 130 is substantially zig-zag 144 or substantially undulating 146, the cross-sectional shape of the indentation 130 may be characterized by a radial height 150, and a circumferential width 152. At least a portion of a side surface 137 of the indentation 130 may be characterized by an inclination angle 158 (angle β) with respect to the radial direction 106. The indentations 130 are equally spaced in the circumferential direction 108, which may be characterized by a circumferential pitch 156 and/or by a corresponding angular pitch 158 (angle π).

Concerning the geometrical shape and dimensions of the substantially zig-zag indentations and the substantially undulating indentations, at least one of the following conditions may hold: The radial height 150 is in a range from 10 mm to 50 mm. The circumferential width 152 is equal to the circumferential pitch 156 and is in a range from 20 mm to 75 mm, in particular from 30 mm to 60 mm. A ratio between the radial height 150 of the indentation 130 and the radial wall thickness 116 of the housing wall 100, in particular the radial wall thickness 116 as measured in surface areas outside of the one or plural indentations 130, in particular as measured through a peak 164, is in a range from 0,5 to 1,0. At least a portion of the side surface 137 of the indentation 130 has an inclination angle 162 (angle β) of a side wall of the indention 134 with respect to the radial direction 106 from 30° to 75°, in particular from 40° to 60°, and more in particular 45°. The number of indentations 130 along the total circumference of the outer wall surface 112 is in a range from 250 to 1000, in particular from 300 to 750, more in particular from 400 to 600.

**Fig. 21** shows a perspective view, similar to the view of Fig. 6, of a magnified portion of the housing wall 100, according to a further modification of the first embodiment example of the present invention shown in Fig. 4. **Fig. 22** shows a perspective view, similar to the views of Figs. 6 and 21, of a magnified portion of the housing wall 100, according to a still further modification of the first embodiment example of the present invention shown in Fig. 4.

In the embodiment examples shown in Figures 21 and 22, the indentations 130 are, as measured in the circumferential direction 108, significantly wider (for example by a factor from 3 to 8, in particular from 4 to 6, and more in particular approximately by a factor of 5) than the regions between the indentations 130. In such geometries, the regions between the indentations 130 may be referred to as "fins". However, these "fins" differ from conventional fins in that the "fins" shown in Figures 21 and 22 are integral with the housing wall 100 (or in other words are part of the housing wall 100), while conventionally known fins are provided separately and fixed to the surface by specific fixation techniques, such as gluing or bolting.

In the embodiment example shown in Fig. 21, the "fins" have a radial height 150 of 50 mm, and a circumferential length 154 of 50 mm; the "fins" are arranged at an angular pitch of 5°, so that a total number of 72 "fins" is provided along the circumference of the housing wall 100.

In the embodiment example shown in Fig. 22, the "fins" have a radial height 150 of 10 mm, and a circumferential length 154 of 10 mm; the "fins" are arranged at an angular pitch of 2,5°, so that a total number of 144 "fins" is provided along the circumference of the housing wall 100.

In the embodiment example shown in Fig. 21 having the "fins" with a radial height of 50 mm and a circumferential length of 50 mm as a result of having machined the complementary indentations 130, the surface area of the outer wall surface 112 is increased by 28%. Thermal simulations have shown that a heat flow through the housing wall 100 is increased by 25%.

In the embodiment example shown in Fig. 22 having the "fins" with a radial height of 50 mm and a circumferential length of 50 mm as a result of having machined the complementary indentations 130, the surface area of the outer wall surface 112 is increased by 28%. Thermal simulations have shown that a heat flow through the housing wall 100 is increased by 22%.

For comparison, further thermal simulations have been conducted, which aimed at estimating the disadvantages of the prior art.

In one such simulation, it has been assumed that fins are bolted to an outer surface. In this simulation, there has been assumed an air gap having a thickness of 0,1 mm between a bottom surface of the fin and the outer wall surface. In this simulation, the air gap turned out to have a heat conductivity of 0,02W/mK. Such fixation technique showed a reduction of the heat flow due to contact resistance of approximately 11%.

In another such simulation, it has been assumed that fins are glued to an outer surface. In this simulation, the adhesive has been assumed to be an epoxy-based glue having a heat conductivity of 2W/mK, and a film thickness of 0,5 mm between a bottom surface of the fin and the outer wall surface. Such fixation technique showed a reduction of the heat flow due to contact resistance of approximately 2%.

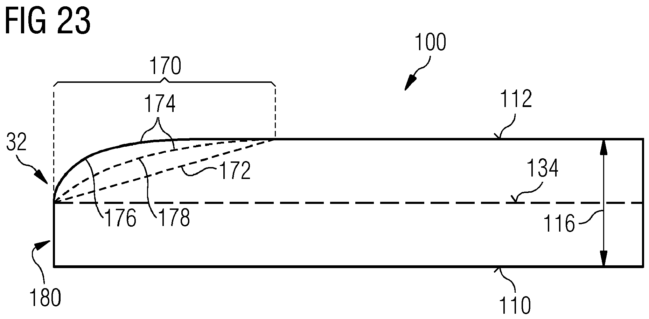

**Fig. 23** shows, in a cross-sectional view, a portion of a housing wall 100 according to a fifth embodiment example of the present invention, wherein the cross-sectional view cuts, in a plane comprising the axis 102 (see Figures 6, 10, 14 and 19), through a peak or peak line 164 of a region between two adjacent indentations 130 according to any one of the first to fourth embodiment.

In the embodiment example shown in Fig. 23, the outer wall surface 112 is tapering in a direction towards an axial end 180 of the housing wall 100, which end 180 would face a wind turbine's blades and hub to be connected to the rotor housing. The tapering of the outer wall surface 112 is provided namely in a section outside of the at least one indentation 130, or generally in the sections outside of each indentation 130.

The tapering is formed to proceed along the axial direction 104 in a range of 100 mm, in particular 75 mm, more in particular 50 mm, as measured from the axial end 180 of the housing wall 100. The tapering section 170 is shown to taper in a direction towards the axial end 180 when viewed in a cross-section that contains the axis 102 of the housing wall 100, from the outer wall surface 112 to the indentation bottom 134.

The tapering may proceed in a linear shape 172, or in a curved shape 174. If the tapering occurs in a curved shape 174, this may be selected from the group that consists of an elliptical shape 176, a parabolic shape 178, a hyperbolic shape (not shown).

The tapering is provided to smooth out the transition from the outer surface of a wind rotor hub (not shown) to the outer wall surface 112 of the housing wall 100.

The housing wall 100, in the embodiments shown in Figures 4 to 23, is an outer housing wall 100 of a rotor 40 for an external electric power generator 10, as may be used in a direct-drive wind turbine (not shown). In this application, a plurality of axially elongated magnet elements 46 will be provided on the inner wall surface 110 of the housing wall 100, as illustrated in Fig. 3.

In this specification, example embodiments have been presented in terms of a selected set of details. However, a person of ordinary skill in the art would understand that many other example embodiments may be practiced which include a different selected set of these details. It is intended that the following claims cover all possible example embodiments.

Supplementary, it is to be noted that "having" or "comprising" does not exclude other elements or steps, and that "a" or "an" does not exclude a plurality. In addition, it is to be noted that features or steps, which have been described above with reference to one of the above embodiment examples, may also be used in combination with other features or steps of other embodiment examples that have been described above. Reference numerals in the claims are not to be construed as limitations.

## Claims

1. A housing wall (100) for a rotor housing of a rotor (40) for an external electric power generator (10) of a, for example direct-drive, wind turbine, or a housing wall (100) for a rotor housing of an external rotor of an electric machine, for example an electric generator or an electric motor, wherein the housing wall (100) is an outer housing wall and has:
an inner wall surface (110), an outer wall surface (114) and an axial length (124),
wherein the inner wall surface (110) is cylindrical, and
wherein the outer wall surface (112) has at least one indentation (130), which extends over at least a part of the axial length (124), in particular over the total axial length (124), of the outer wall surface (112).

2. The housing wall (100) according to claim 1, wherein the outer wall surface (112) has a plurality of indentations (130), at least some of which extend over at least a part of the axial length (124), in particular over the total axial length (124), of the outer wall surface (112), in particular wherein a first portion of a plurality of indentations (130) extend over only a part of the axial length (124), and a second portion of the plurality of indentations (130) extend over the total axial length (124), of the outer wall surface (112) .

3. The housing wall (100) according to claim 1 or 2, wherein in the region/s of the outer wall surface (112) outside of the at least one indentation (130), in particular outside of each indentation (130), the outer wall surface (112) is cylindrical.

4. The housing wall (100) according to any one of the claims 1 to 3, wherein the at least one indentation (130), in particular each indentation (130), has an indentation bottom (134), which is cylindrical.

5. The housing wall (100) according to any one of the claims 1 to 4, wherein the at least one indentation (130), in particular each indentation (130), has been machined into the outer wall surface (112) of the housing wall (102).

6. The housing wall (100) according to any one of the claims 2 to 5,
wherein the indentations (130) are equally spaced, in particular by a circumferential pitch (156) and/or by a corresponding angular pitch (157), along the circumferential direction (108) around the outer wall surface (112), or
wherein the indentations (130) are not all equally spaced along the circumferential direction (108) around the outer wall surface (112), in particular wherein the plurality of indentations (130) comprises at least two groups of equally spaced indentations (130), wherein the at least two groups have a different mutual circumferential spacing of adjoining indentations (130) in the circumferential direction (108).

7. The housing wall (100) according to any one of the claims 1 to 6,
wherein an outer wall diameter (114) of the outer wall surface (112) is in a range from 4,0 m to 12 m, in particular from 5,0 m to 10 m, and more in particular from 6,0 m to 8,0 m, and/or
wherein a total radial wall thickness (116) of the outer wall surface (112) is in a range from 30 mm to 60 mm, in particular from 32 mm to 50 mm, more in particular from 34 mm to 40 mm, and/or
wherein a ratio of a total radial wall thickness (116) of the outer wall surface (112) to an outer wall diameter (114) of the outer wall surface (112) is in a range between 0,4% to 1,0%, in particular from 0,5% to 0,8%.

8. The housing wall (100) according to any one of the claims 1 to 7, wherein the at least one indentation (130), in particular each indentation (130), extends at a spiral angle (132) with respect to the axial direction (104) of the housing wall (102),
in particular wherein the spiral angle (132) is in a range from 12° to 20°, in particular from 13° to 19°, more in particular from 14° to 18°, and still more in particular from 15° to 17°.

9. The housing wall (100) according to any one of the claims 1 to 8, wherein the at least one indentation (130), in particular each indentation (130), has, when viewed in an axial direction (124) of the housing wall (100) in a cross-section that is perpendicular to the axial direction (124) of the housing wall (100), a cross-sectional shape that is selected from the group that includes a substantially rectangular shape (140), a substantially trapezoidal shape (142), a substantially zig-zag shape (144), a substantially undulating shape (146).

10. The housing wall (100) according to claim 9, wherein said cross-sectional shape is substantially rectangular (140) or substantially trapezoidal (142), wherein said cross-sectional shape of the indentation (130) has a radial height (150), a circumferential width (152), a cylindrical outer wall surface (112) between adjacent indentations (130) has a circumferential length (154), and at least some of a plurality, in particular three, of the indentations (130) are equally spaced in the circumferential direction (108) by a circumferential pitch (156) and/or by a corresponding angular pitch (158), π, and wherein at least one of the following conditions holds:
- the radial height (150) is in a range from 10 mm to 50 mm;
- the circumferential width (152) is in a range from 100 mm to 600 mm, in particular from 100 mm to 500 mm;
- the circumferential length (154) is in a range from 10 mm to 70 mm, in particular from 10 mm to 50 mm, or from 100 mm to 500 mm, in particular from 100 mm to 350 mm;
- the number of indentations along the total circumference of the outer wall surface (112) is in a range from 30 to 250, in particular from 50 to 150, more in particular from 70 to 145;
- the circumferential pitch (156) is in a range from 100 mm to 500 mm, in particular from 125 mm to 400 mm, and more in particular from 150 mm to 300 mm;
- the angular pitch (158), π, is in a range from 2° to 10°, in particular from 2,5° to 8°, and more in particular from 3° to 6°;
- a ratio between the radial height (150) of the indentation (130) and the radial wall thickness (116) of the housing wall (100), in particular the radial wall thickness (116) as measured in surface areas outside of the one or plural indentations (130), is in a range from 0,5 to 1,0; and
- if the cross-sectional shape is trapezoidal (142), an inclination angle (160), α, of a side wall (136) of the indention (130) with respect to the radial direction (106) is from 30° to 75°, in particular from 40° to 60°.

11. The housing wall (100) according to claim 9 or 10, wherein the substantially trapezoidal cross-sectional shape (142) differs from the substantially rectangular cross-sectional shape (140) by at least one of the following features:
- a transition from the outer wall surface (112) to a side surface (137) of the indentation (130) is chamfered;
- a side surface (137) of the indentation (130) is inclined, in particular by an inclination angle (158), α;
- a transition from a side surface (137) of the indentation (130) to the indentation bottom (134) is chamfered.

12. The housing wall (100) according to claim 9, wherein said cross-sectional shape is substantially zig-zag (144) or substantially undulating (146), wherein said cross-sectional shape of the indentation (130) has a radial height (150), a circumferential width (152), at least a portion of a side surface (137) of the indentation (130) has an inclination angle (158), β, with respect to the radial direction (106), and at least some of a plurality, in particular three, of the indentations (130) are equally spaced in the circumferential direction (108) by a circumferential pitch (156) and/or by a corresponding angular pitch (158), π, and wherein at least one of the following conditions holds:
- the radial height (150) is in a range from 10 mm to 50 mm;
- the circumferential width (152) is equal to the circumferential pitch (156) and is in a range from 20 mm to 75 mm, in particular from 30 mm to 60 mm;
- a ratio between the radial height (150) of the indentation (130) and the radial wall thickness (116) of the housing wall (100), in particular the radial wall thickness (116) as measured in surface areas outside of the one or plural indentations (130), in particular as measured through a peak (164), is in a range from 0,5 to 1,0;
- at least a portion of the side surface (137) of the indentation (130) has an inclination angle (162), β, of a side wall of the indention (134) with respect to the radial direction (106) from 30° to 75°, in particular from 40° to 60°, and more in particular 45°;
- the number of indentations (130) along the total circumference of the outer wall surface (112) is in a range from 250 to 1000, in particular from 300 to 750, more in particular from 400 to 600.

13. The housing wall (100) according to any one of the claims 6 to 12, wherein the outer wall surface (112), in a section outside of the at least one indentation (130), in particular in sections outside of each indentation (130), and along the axial direction (104) in a range of 100 mm, in particular 75 mm, more in particular 50 mm, as measured from an axial end (180) of the housing wall (100), which end (180) faces a wind turbine's blades and hub to be connected to the rotor housing, has a tapering section (170), which is tapering in a direction towards the axial end (180) when viewed in a cross-section that contains an axis (102) of the housing wall (100) from the outer wall surface (112) to the indentation bottom (134), wherein in particular the tapering proceeds in a linear shape (172), or in a curved shape (174) that is selected from the group that consists of an elliptical shape (176), a parabolic shape (178), a hyperbolic shape.

14. The housing wall (100) according to any one of the claims 2 to 13, wherein the plurality of indentations (130) comprises a first group of indentations and a second group of indentations, wherein the indentations in the first group differ from the indentations in the second group at least by one parameter that is selected from the group consisting of an axial length of the indentation (130), a position of the indentation (130) in the axial direction (104) of the housing wall (100), and a shape of the indentation (130) when viewed in an axial direction (124) of the housing wall (100) in a cross-section that is perpendicular to the axial direction (124) of the housing wall (100).

15. A rotor (40)for an external electric power generator (10) of a, for example direct-drive, wind turbine, and/or a rotor for an external rotor of an electric machine, for example an electric generator or an electric motor, wherein the rotor (40)has a rotor housing having an outer housing wall (100) according to any one of the claims 1 to 14, in particular wherein the inner wall surface (110) of the outer housing wall (100) supports a plurality of, in particular axially elongated, magnet elements (46) or magnetic field excitation coils.
